# EUROPEAN PATENT SPECIFICATION

(11) **EP 3 010 619 B1**
(45) Date of publication and mention of the grant of the patent: **26.08.2020**
(21) Application number: 14734575.5
(22) Date of filing: 10.04.2014
(51) Int. Cl.: B01D 29/52

(54) **FILTER PROVIDING COARSE MEDIA WITH HIGH-EFFICIENCY INSERT**
FILTER ZUR BEREITSTELLUNG GROBER MEDIEN MIT HOCHEFFIZIENTEM EINSATZ
FILTRE PERMETTANT DE DOTER UN MILIEU FILTRANT GROSSIER D'UNE PIÈCE RAPPORTÉE DE HAUTE EFFICACITÉ

(30) Priority: 19.06.2013 US 201361836980 P
(43) Date of publication of application: 27.04.2016
(73) Proprietor: Illinois Tool Works Inc., Glenview, IL 60025 (US)
(72) Inventor: ALTWIES, Eugene W., Glenview, Illinois 60025 (US); ANDRESEN, John R., Glenview, Illinois 60025 (US)
(74) Representative: HGF
(86) International application number: PCT/US2014/033640
(87) International publication number: WO 2014/204565

(56) References cited:
- EP-A1- 2 100 652
- EP-A1- 2 156 874
- WO-A1-93/05936
- JP-A- 2007 327 413
- US-A- 3 283 904
- US-A- 3 368 687
- US-A- 5 762 792
- US-A1- 2009 294 343

## Description

### FIELD OF THE INVENTION

The present invention relates to fluid filters as defined in the preamble of claim 1 and to a method of manufacturing such a fluid filter.

A fluid filter as defined in the preamble of claim 1 is known from US 5 762 792 A. The filtering material is folded in pleats and wound in a cylindrical shape. Similar filters are disclosed in US 3 368 687 A and US 3 283 904 A. EP 2 100 652 A1 describes a bag-like oil filter made of coarser filter material to which a finer filter material is attached around the fluid inlet.

### BACKGROUND OF THE INVENTION

Oil filters are used to remove contaminants from engine oil, transmission oil or the like. In such filtration, there is a trade-off between removing fine contaminants using relatively small filter pore size which provides high filter pressure and the need to limit filter back pressure so that the engine or transmission may receive a steady supply of oil especially on start up when oil viscosity can be highest.

This trade-off may be effectively managed by means of a design in which separate parallel paths are traversed by the oil, both through a coarse filter media with large pore size and through a fine, high-efficiency filter media with small pore size. The coarse filter media provides a low-pressure drop passage through the filter that is relatively resistant to blinding. The fine filter media is arranged to intercept a portion of the oil flow to eliminate fine particles over time with reduced blinding from larger particles handled by the coarse filter media. Separate supporting structures are generally needed to hold the different filter media in the two oil paths through the filter.

### SUMMARY OF THE INVENTION

The present invention provides two separate paths through the filter media while substantially eliminating the need for a separate supporting and path-defining structure. Two different filter media types are attached directly to each other in a single filter structure, typically with the fine filter medium being an insert or overlay to the coarse filter material. In this way, the construction costs of the filter are significantly reduced.

The present invention provides a fluid filter according to claim 1 and a method of manufacturing a fluid filter according to claim 10.

Specifically then, the present invention in one embodiment provides a fluid filter having a housing providing an inlet port and an outlet port and enclosing a volume therebetween. A coarse filter fabric is attached to a fine filter fabric to form an integrated flexible filter sheet interposed in a path between the inlet port and the outlet port so that fluid flowing from the inlet port to the outlet port passes through the filter medium both through the coarse filter fabric alone and the fine filter fabric. The flexible filter sheet is formed into a bag having an opening attached to a rim of the inlet port. Only the coarse filter fabric is attached to the inlet port. The fine filter fabric is positioned to lie closer to the outlet than the coarse filter fabric.

It is thus a feature of at least one embodiment of the invention to simplify the construction of a filter providing parallel paths through different filter media by allowing the filter media to be inter-supporting without a rib tray or plastic scaffolding or the like, and to provide a filter structure that presents a substantial area of flexible filter sheet in a compact volume and that avoids the need to attach two different material types to the inlet port. It further encourages flow through the fine filter medium under low viscosity flow.

The integrated flexible filter sheet may provide single continuous opposed first and second surfaces.

It is thus a feature of at least one embodiment of the invention to eliminate branched or bifurcated filter structures requiring additional support or separation.

An attachment seam between the coarse filter fabric and the fine filter fabric may be substantially unsupported by the housing.

It is thus a feature of at least one embodiment of the invention to permit the coarse filter fabric and fine filter fabric to be closely adjacent in the flow of fluid.

The coarse filter fabric and the fine filter fabric maybe attached to each other without intervening rigid structure.

It is thus a feature of at least one embodiment of the invention to permit pre-manufacture of the flexible filter sheet before installation into the housing as opposed to systems that require each sheet be assembled in the housing structure.

The flexible filter sheet may be attached to the housing along only a single closed path so that fluid flowing from the inlet port to the outlet port must pass through the filter medium.

It is thus a feature of at least one embodiment of the invention to eliminate the need for multiple paths of attachment of the filter media to the housing such as may make assembly difficult.

At least one of the coarse filter fabric and the fine filter fabric may be thermoplastic materials attached to the other by welding.

It is thus a feature of at least one embodiment of the invention to provide a simple method of attaching different types of filter media.

Alternatively, the flexible filter sheet may be supported at an outer periphery against an inner wall of the housing.

It is thus a feature of at least one embodiment of the invention to provide a filter where the support may be obtained entirely by interengaging rims of the two-part housing clamping about the filter medium.

The fine filter medium may be attached at only a portion of its edge to the coarse filter medium.

It is thus a feature of at least one embodiment of the invention to provide a simple method of implementing two paths of fluid flow in any filter having a flexible filter sheet by seaming two different materials to each other.

Alternatively, the fine filter medium may be attached about an entire edge periphery to the coarse filter medium to lie against the coarse filter medium.

It is thus a feature of at least one embodiment of the invention to allow the coarse filter media to fully support the fine filter media without additional structure.

The volume of the housing may have a greatest extent along a plane and the inlet and outlet ports may be offset from each other along the plane on opposite sides of the plane.

It is thus a feature of at least one embodiment of the invention to provide a method of controlling relative flow rates between the fine filter medium and coarse filter medium without additional diverting structure.

Other features and advantages of the invention will become apparent to those skilled in the art upon review of the following detailed description, claims and drawings in which like numerals are used to designate like features.

### BRIEF DESCRIPTION OF THE DRAWINGS

Fig. 1 is an exploded perspective view in partial cutaway of a first embodiment of the invention providing a bag filter element held at the interface between two housing portions, the bag filter element including a coarse filter medium with a section of inserted fine filter medium;
Fig. 2 is a perspective phantom view of a filter in which the bag filter has been replaced with a single filter layer;
Fig. 3 is a perspective partial cutaway of an alternative bag filter design in which the fine filter medium is applied over the coarse filter medium; and
Fig. 4 is a cross-section along lines 4-4 of Fig. 3 showing the attachment of the fine filter medium over the coarse filter medium.

Before the embodiments of the invention are explained in detail, it is to be understood that the invention is not limited in its application to the details of construction and the arrangement of the components set forth in the following description or illustrated in the drawings. The invention is capable of other embodiments and of being practiced or being carried out in various ways. Also, it is to be understood that the phraseology and terminology used herein are for the purpose of description and should not be regarded as limiting. The use of "including" and "comprising" and variations thereof is meant to encompass the items listed thereafter and equivalents thereof as well as additional items and equivalents thereof.

### DETAILED DESCRIPTION OF THE PREFERRED EMBODIMENTS

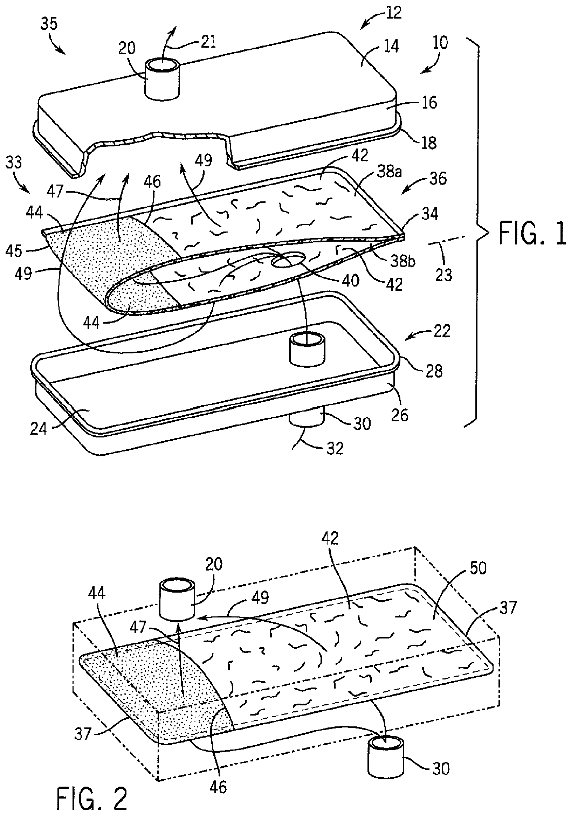

Referring now to Fig. 1, a filter system 10 may include an upper cover housing 12, in one example, providing a generally rectangular top panel 14 having downwardly extending walls 16 at its periphery, the walls 16 terminating at a lower lip as radially extending flange 18. An outlet port 20 for discharging filtered oil 21 may be provided in the top panel 14 to communicate therethrough.

A similar lower cover housing 22, being generally a mirror reflection of the upper cover housing 12 (with the exception of the outlet port 20), may also provide for a generally rectangular lower filter panel 24 but with upstanding sidewalls 26 terminating at an upper lip as radially extending flange 28. Each of the upper cover housing 12 and lower cover housing 22 may be thermoplastic materials and the radially extending flange 28 of the lower cover housing 22 may be sized to abut and be attached to flange 18, for example, by vibration, laser, thermal or other type of welding to create an enclosed volume 33 of the housing assembly 35.

An entrance port 30 may be provided through the lower filter panel 24 for the receipt of unfiltered oil 32 into the enclosed volume 33. The entrance port 30 may be offset with respect to the outlet port 20 along the lateral axis 23, the latter generally aligned with the longest dimension of the assembled upper cover housing 12 and lower cover housing 22, for example, so that the entrance port 30 and outlet port 20 are positioned at opposite ends of the housing 35.

A filter bag 36 may be placed within the volume 33 having an outer edge 34 with a generally rectangular periphery. Three sides of the edge 34 maybe sandwiched between the flanges 18 and 28, the remaining edge being spaced from an inner end of the volume 33 closest to the exit port 20. The filter bag 36 consists of upper and lower filter panels 38a and 38b folded from a single sheet of dual filter material at folded edge 45. The adjacent edges of the panel outside of the folded edge 45 are attached and sealed together at the outer edge 34 to provide an enclosed internal volume accessible through an opening 40 in the lower filter panel 38b.

The opening 40 is welded or otherwise attached to the entrance port 30 so that unfiltered oil 32 flows into the volume of the filter bag 36 and must flow out of the upper filter panel 38a or lower filter panel 38b to pass through the outlet port 20. The filter bag 36 is positioned so that the folded edge 45 is closer to the outlet port 20 and further from the inlet port 30.

As noted above, the length of the filter bag 36 along the axis 23 is somewhat less than the length along that axis 23 of the internal volume 33 of the housing (formed by upper and lower cover housings 12 and 22) to allow the flow out of the lower filter panel 38b to pass through the outlet port 20 around the folded edge 45 to the outlet port 20.

Each of the upper and lower filter panels 38a and 38b are constructed in part of a coarse filter material 42 and in part of a high-efficiency filter material 44 having a smaller pore size and being less permeable than the coarse filter material 42. The coarse filter material 42 may be, for example, a filtration media having a relatively coarse structure with large filtration pore sizes such as a metal fabric or plastic fabric such as a needle-punched non-woven fabric such as a felt. The high-efficiency filter material 44 may, for example, be a fiberglass mat or fine woven wire screen. The term fabric used herein is intended to include both woven and nonwoven fabrics. In one example, the coarse filter material 42 may retain particles greater than 20 to 30 microns and the high-efficiency filter may retain particles greater than 5 to 10 microns.

The high-efficiency filter material 44 mat may be attached to the coarse filter material 42, for example, by joining the two together at common seam 46 dividing each of the upper and lower filter panels 38a and 38b within the outer seam 34. This common seam 46 may be created using ultrasonic, laser, thermal or other type of welding of the two materials or other comparable fastening method. A fold passing through the high-efficiency filter material 44 may form the folded edge 45.

Generally the filtration area provided by the high-efficiency filter material 44 will be smaller than the filtration area of the coarse filter material 42 to filter a lesser proportion of the oil flowing through the filter system 10 in each cycle.

In use, when oil is cold or viscous, it will preferentially flow through the coarse filter material 42 rather than the high-efficiency filter material 44, as indicated by arrows 49 as a result of the greater flow resistance offered by the high-efficiency filter material 44. When the oil is warmer and less viscous a greater proportion will flow through the high-efficiency filter material 44 as indicated by arrows 47. In this way, back pressure is reduced when the oil is cold as released by flow through the coarse filter material 42 and yet as the oil warms small particles (for example, dirt, metal shavings and the like) that may not be captured by the coarse filter material 42 are captured by the high-efficiency filter material 44. This flow of heated oil is promoted by placing the high-efficiency filter material 44 closest to the outlet port 20 and thus along the natural path of the oil in leaving the volume 33.

In an alternative embodiment, the filter bag 36 may have its upper filter panel 38a constructed wholly of the coarse of filter material 42 and the lower panel 38b constructed wholly of the high-efficiency filter material 44. In this way the common seam 46 is moved to what was the folded edge 45. In other respects this embodiment is the same as the filter bag 36 described above with the shared edges of the upper filter panel 38a and 38b other then the common seam 46 sealed together between flanges 18 and 28.

Referring now to Fig. 2, in an alternative embodiment, a single planar filter sheet 50 may replace the filter bag 36, the single planar filter sheet 58 duplicating the upper filter panel 38a without the lower filter panel 38b. The entire periphery 37 of the single planar filter sheet 50 is captured between the flanges 18 and 28 (shown in Fig. 1). This filter sheet 50 also has coarse filter material 42 and high-efficiency filter material 44 with relative areas similar to that described above with respect to Fig. 1 so that a majority of the filtration area is provided by coarse filter material 42. The benefits described above with respect to the flows 47 and 49 are also obtained in this design albeit with less total filtration area.

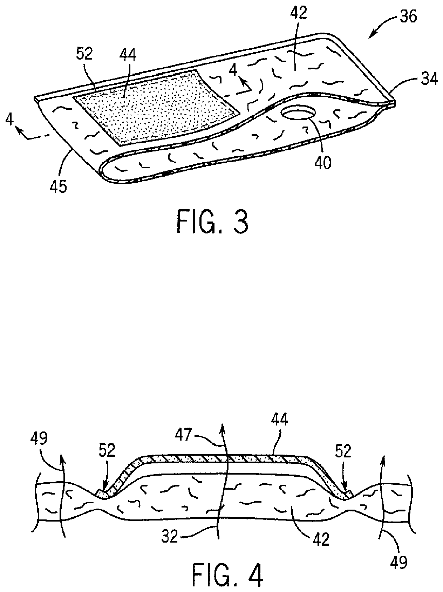

Referring now to Figs. 3 and 4, in an alternative embodiment, the filter bag 36 may be constructed of an unbroken piece of coarse filter material 42 folded over on itself at a folded edge 45 and seamed at seam 34 to form an enclosed filter bag 36 with opening 40. This filter bag 36 may be substantially identical to the filter bag 36 described with respect to Fig. 1 except for being constructed of a single filter material. The high-efficiency filter material 44 may then be placed as a patch or applique over a portion of the surface of the coarse filter material 42. The patch or applique is displaced toward the outlet port 20 relative to the inlet port 30 to be in the path of natural flow between the inlet port 30 and outlet port 20. The relative areas of the patch and the coarse filter material 42 outside of the patch may stand in the same ratio as that discussed above with respect to the high-efficiency filter material 44 and coarse filter material 42 in the unoverlapping configuration of Fig. 1.

Referring to Fig. 4, the high-efficiency filter material 44 may be attached to the coarse filter material 42 by welding at a peripheral seam 52 extending around the entire periphery of the high-efficiency filter material 44. In this case, unfiltered oil 32 flows in series through coarse filter material 42 and then through high-efficiency filter material 44 providing the same high-efficiency filtration desired. The flows 49 and 47 may also be created in this design with flow 47 being through both coarse filter material 42 and high-efficiency filter 44 and flow 49 being only through coarse filter material 42.

It will be appreciated that this overlapping configuration shown in Fig. 4 may alternatively place the high-efficiency material 44 upstream of the coarse filter material 42 (as opposed to downstream as shown in Fig. 4) welded at its periphery to the coarse filter material 44. In addition, this configuration of overlapping filter materials may be applied not only to the bag embodiment of Fig. 3 but also to a single sheet of coarse filter material 42 spanning the entire periphery 37 of the filter volume where a patch of high-efficiency material 44 is placed upstream or downstream against the coarse filter material 42 and welded thereto at a seam running around the periphery of the high-efficiency material 44.in general, the edges of the high-efficiency material 44 may lie wholly within the edges of the coarse filter material 42 or may share some common edges with the coarse filter material 44.

## Claims

1. A fluid filter (10) comprising:
a housing (35) providing an inlet port (30) and an outlet port (20) and
enclosing a volume (33) therebetween; and
a coarse filter fabric (42) attached to a fine filter fabric (44) to form an integrated flexible filter sheet (38) interposed in a path between the inlet port (30) and the outlet port (20) and providing two paths for fluid flowing from the inlet port (30), one path passingthrough the coarse filter fabric (42) and one path passing through the fine filter fabric (44), **characterized in that**
the flexible filter sheet (38) is formed into a bag (36) having an opening (40) attached to a rim of the inlet port (30), wherein only the coarse filter fabric (42) is attached to the inlet port (30), and
wherein the fine filter fabric (44) is positioned to lie closer to the outlet than the coarse filter fabric (42).

2. The fluid filter of claim 1 wherein the integrated flexible filter sheet (38) provides single, continuous opposed first and second surfaces.

3. The fluid filter of claim 1 or 2 wherein an attachment seam (46, 52) between the coarse filter fabric (42) and the fine filter fabric (44) is substantially unsupported by the housing (35), and/ or
wherein the coarse filter fabric (42) and the fine filter fabric (44) are attached to each other without an intervening rigid structure.

4. The fluid filter of one of the preceding claims wherein the flexible filter sheet (38) is attached to the housing (35) along only a single closed path so that fluid flowing from the inlet port (30) to the outlet port (20) must pass through the filter medium.

5. The fluid filter of one of the preceding claims wherein at least one of the coarse filter fabric (42) and the fine filter fabric (44) are thermoplastic materials attached to the other by welding.

6. The fluid filter of one of the preceding claims wherein the flexible filter sheet (38) is supported at an outer periphery (34, 37) against an inner wall of the housing (35).

7. The fluid filter of one of the preceding claims wherein the fine filter fabric (44) is attached at only a portion of its edge to the coarse filter fabric (42), or
wherein the fine filter fabric (44) is attached about an entire edge periphery to the coarse filter fabric (42) to lie against the coarse filter fabric (42).

8. The fluid filter of claim 7 wherein the fine filter fabric (44) is a patch on the bag.

9. The fluid filter of one of the preceding claims wherein the volume (33) has a greatest extent along a plane and wherein the inlet and outlet ports (30, 20) are offset from each other along the plane on opposite sides of the plane.

10. A method of manufacturing a fluid filter (10) of a type having:
a housing (35) providing an inlet port (30) and an outlet port (20) and
enclosing a volume (33) therebetween; and
a coarse filter fabric (42) attached to a fine filter fabric (44) to form a single
integrated flexible filter sheet (38) interposed in a path between the inlet port (30) and the outlet port (20) and providing two paths for fluid flowing from the inlet port (30) to the outlet port (20), one path passing through the coarse filter fabric (42) and one path passing through the fine filter fabric (44), the method comprising the steps of:
(a) attaching a coarse filter fabric (42) to a fine filter fabric (44) along an extenuated seam path to provide said single integrated flexible filter sheet (38); and
(b) after step (a) attaching the flexible filter sheet (38) to the housing (35) within the volume (33) so that fluid flowing from the inlet port (30) to the outlet port (20) must pass through the flexible filter sheet (38), **characterized by**
folding the flexible filter sheet (38) over on itself and attaching adjacent edges to form an enclosed bag (36), cutting a hole (40) in the coarse filter fabric of the flexible filter sheet (38), and attaching an edge of the hole to a rim of the inlet port (30),
wherein the fine filter fabric (44) is positioned to lie closer to the outlet than the coarse filter fabric (42).

11. The method of claim 11 wherein the coarse filter fabric (42) and the fine filter fabric (44) are attached to the other by welding.

12. The method of claim 10 or 11,
wherein at step (b) the flexible filter sheet (38) is attached at an outer periphery (34, 37) against an inner wall of the housing (35).

13. The method of one of claims 10 to 12 wherein at step (a) the fine filter fabric (44) is attached at only a portion of its edge to the coarse filter fabric (42), or
wherein at step (a) the fine filter fabric (44) is attached about an entire edge periphery to the coarse filter fabric (42) to lie against the coarse filter fabric (42).

## Patentansprüche

1. Fluidfilter (10), umfassend:
ein Gehäuse (35), das eine Einlassöffnung (30) und eine Auslassöffnung (20) bereitstellt und ein Volumen (33) dazwischen umschließt; und
ein grobes Filtergewebe (42), das an einem feinen Filtergewebe (44) befestigt ist, um ein integriertes flexibles Filterblatt (38) zu bilden, das in einem Weg zwischen der Einlassöffnung (30) und der Auslassöffnung (20) angeordnet ist und zwei Wege für von der Einlassöffnung (30) fließende Flüssigkeit bereitstellt, wobei ein Weg durch das grobe Filtergewebe (42) verläuft und eine Weg durch das feine Filtergewebe (44) verläuft,
**dadurch gekennzeichnet, dass**
das flexible Filterblatt (38) zu einem Beutel (36) geformt wird, der eine Öffnung (40) aufweist, die an einem Rand der Einlassöffnung (30) befestigt ist, wobei nur das grobe Filtergewebe (42) an der Einlassöffnung (30) befestigt ist, und
wobei das feine Filtergewebe (44) so angeordnet ist, dass es näher beim Auslass liegt als das grobe Filtergewebe (42).

2. Fluidfilter nach Anspruch 1, wobei das integrierte flexible Filterblatt (38) einzelne, kontinuierliche gegenüberliegende erste und zweite Oberflächen bereitstellt.

3. Fluidfilter nach Anspruch 1 oder 2, wobei eine Befestigungsnaht (46, 52) zwischen dem groben Filtergewebe (42) und dem feinen Filtergewebe (44) im Wesentlichen nicht vom Gehäuse (35) unterstützt wird, und/oder
wobei das grobe Filtergewebe (42) und das feine Filtergewebe (44) ohne eine dazwischenliegende starre Struktur aneinander befestigt sind.

4. Fluidfilter nach einem der vorhergehenden Ansprüche, wobei das flexible Filterblatt (38) nur entlang eines einzelnen geschlossenen Wegs am Gehäuse (35) befestigt ist, so dass Flüssigkeit, die von der Einlassöffnung (30) zur Auslassöffnung (20) fließt, das Filtermedium passieren muss.

5. Fluidfilter nach einem der vorhergehenden Ansprüche, wobei mindestens eines des groben Filtergewebes (42) und des feinen Filtergewebes (44) thermoplastische Materialien sind, die durch Schweißen aneinander befestigt werden.

6. Fluidfilter nach einem der vorhergehenden Ansprüche, wobei das flexible Filterblatt (38) an einem Außenumfang (34, 37) gegen eine Innenwand des Gehäuses (35) abgestützt wird.

7. Fluidfilter nach einem der vorhergehenden Ansprüche, wobei das feine Filtergewebe (44) nur an einem Teil seines Rands am groben Filtergewebe (42) befestigt ist, oder
wobei das feine Filtergewebe (44) um einen gesamten Randumfang am groben Filtergewebe (42) befestigt ist, damit es am groben Filtergewebe (42) anliegt.

8. Fluidfilter nach Anspruch 7, wobei das feine Filtergewebe (44) ein Flicken auf dem Beutel ist.

9. Fluidfilter nach einem der vorhergehenden Ansprüche, wobei das Volumen (33) eine größte Ausdehnung entlang einer Ebene aufweist und wobei die Einlass- und Auslassöffnungen (30, 20) entlang der Ebene auf gegenüberliegenden Seiten der Ebene voneinander versetzt sind.

10. Verfahren zur Herstellung eines Fluidfilters (10) einer Art, die aufweist:
ein Gehäuse (35), das eine Einlassöffnung (30) und eine Auslassöffnung (20) bereitstellt und ein Volumen (33) dazwischen umschließt; und
ein grobes Filtergewebe (42), das an einem feinen Filtergewebe (44) befestigt ist, um ein einzelnes integriertes flexibles Filterblatt (38) zu bilden, das in einem Weg zwischen der Einlassöffnung (30) und der Auslassöffnung (20) angeordnet ist und zwei Wege für von der Einlassöffnung (30) zur Auslassöffnung (20) fließende Flüssigkeit bereitstellt, wobei ein Weg durch das grobe Filtergewebe (42) verläuft und ein Weg durch das feine Filtergewebe (44) verläuft, wobei das Verfahren die folgenden Schritte umfasst:
(a) Befestigen eines groben Filtergewebes (42) an einem feinen Filtergewebe (44) entlang eines abgeschwächten Nahtwegs zur Bereitstellung des einzelnen integrierten flexiblen Filterblatts (38); und
(b) nach Schritt (a) Befestigen des flexiblen Filterblatts (38) am Gehäuse (35) innerhalb des Volumens (33), so dass Flüssigkeit, die von der Einlassöffnung (30) zur Auslassöffnung (20) fließt, das flexible Filterblatt (38) passieren muss, **gekennzeichnet durch**
Umfalten des flexiblen Filterblatts (38) über sich selbst und Befestigen benachbarter Ränder zur Bildung eines umschlossenen Beutels (36), Schneiden eines Lochs (40) im groben Filtergewebe des flexiblen Filterblatts (38) und Befestigen eines Rands des Lochs an einem Rand der Einlassöffnung (30),
wobei das feine Filtergewebe (44) so angeordnet ist, dass es näher beim Auslass liegt als das grobe Filtergewebe (42).

11. Verfahren nach Anspruch 11, wobei das grobe Filtergewebe (42) und das feine Filtergewebe (44) durch Schweißen aneinander befestigt werden.

12. Verfahren nach Anspruch 10 oder 11,
wobei in Schritt (b) das flexible Filterblatt (38) an einem Außenumfang (34, 37) gegen eine Innenwand des Gehäuses (35) abgestützt wird.

13. Verfahren nach einem der Ansprüche 10 bis 12, wobei in Schritt (a) das feine Filtergewebe (44) nur an einem Teil seines Rands am groben Filtergewebe (42) befestigt wird, oder
wobei in Schritt (a) das feine Filtergewebe (44) um einen gesamten Randumfang am groben Filtergewebe (42) befestigt wird, damit es am groben Filtergewebe (42) anliegt.

## Revendications

1. Filtre pour fluides (10) comprenant :
un boîtier (35) pourvu d'un orifice d'entrée (30) et d'un orifice de sortie (20) et renfermant un volume (33) entre ceux-ci ; et
un tissu filtrant grossier (42) fixé à un tissu filtrant fin (44) pour former une feuille filtrante flexible intégrée (38) interposée dans un passage entre l'orifice d'entrée (30) et l'orifice de sortie (20) et formant deux passages pour un fluide qui s'écoule à partir de l'orifice d'entrée (30), un passage traversant le tissu filtrant grossier (42), et un passage traversant le tissu filtrant fin (44), **caractérisé en ce que**
la feuille filtrante flexible (38) est formée en un sac (36) comportant une ouverture (40) fixée à un rebord de l'orifice d'entrée (30), seul le tissu filtrant grossier (42) étant fixé à l'orifice d'entrée (30), et dans lequel le tissu filtrant fin (44) est positionné pour se trouver plus près de la sortie que le tissu filtrant grossier (42).

2. Filtre pour fluides selon la revendication 1, dans lequel la feuille filtrante flexible intégrée (38) forme des première et deuxième surfaces individuelles, continues et opposées.

3. Filtre pour fluides selon la revendication 1 ou 2, dans lequel une jointure de fixation (46, 52) entre le tissu filtrant grossier (42) et le tissu filtrant fin (44) n'est pratiquement pas supportée par le boîtier (35), et/ou
dans lequel le tissu filtrant grossier (42) et le tissu filtrant fin (44) sont fixés l'un à l'autre sans structure rigide intermédiaire.

4. Filtre pour fluides selon l'une des revendications précédentes, dans lequel la feuille filtrante flexible (38) est fixée au boîtier (35) le long d'un seul passage fermé individuel si bien que le fluide qui s'écoule de l'orifice d'entrée (30) à l'orifice de sortie (20) doit passer par le milieu filtrant.

5. Filtre pour fluides selon l'une des revendications précédentes, dans lequel au moins l'un du tissu filtrant grossier (42) et du tissu filtrant fin (44) est un matériau thermoplastique fixé à l'autre par soudage.

6. Filtre pour fluides selon l'une des revendications précédentes, dans lequel la feuille filtrante flexible (38) est supportée sur une périphérie externe (34, 37) contre une paroi interne du boîtier (35).

7. Filtre pour fluides selon l'une des revendications précédentes, dans lequel le tissu filtrant fin (44) est fixé seulement sur une partie de son bord au tissu filtrant grossier (42), ou
dans lequel le tissu filtrant fin (44) est fixé sur toute une périphérie de son bord au tissu filtrant grossier (42) pour reposer contre le tissu filtrant grossier (42).

8. Filtre pour fluides selon la revendication 7, dans lequel le tissu filtrant fin (44) est une pièce rapportée sur le sac.

9. Filtre pour fluides selon l'une des revendications précédentes, dans lequel le volume (33) s'étend le plus le long d'un plan et dans lequel les orifices d'entrée et de sortie (30, 20) sont décalés l'un par rapport à l'autre le long du plan sur des côtés opposés du plan.

10. Procédé de fabrication d'un filtre pour fluides (10) d'un type comportant :
un boîtier (35) pourvu d'un orifice d'entrée (30) et d'un orifice de sortie (20) et renfermant un volume (33) entre ceux-ci ; et
un tissu filtrant grossier (42) fixé à un tissu filtrant fin (44) pour former une feuille filtrante individuelle flexible, intégrée (38), interposée dans un passage entre l'orifice d'entrée (30) et l'orifice de sortie (20) et formant deux passages pour le fluide qui s'écoule de l'orifice d'entrée (30) à l'orifice de sortie (20), un passage traversant le tissu filtrant grossier (42), et un passage traversant le tissu filtrant fin (44), le procédé comprenant les étapes qui consistent à :
(a) fixer un tissu filtrant grossier (42) à un tissu filtrant fin (44) le long d'un chemin de jointure atténué pour produire ladite feuille filtrante individuelle flexible, intégrée (38) ; et
(b) après l'étape a), fixer la feuille filtrante flexible (38) au boîtier (35) à l'intérieur du volume (33) si bien que le fluide qui s'écoule de l'orifice d'entrée (30) à l'orifice de sortie (20) doit passer par la feuille filtrante flexible (38),
**caractérisé par** :
le repli de la feuille filtrante flexible (38) sur elle-même et la fixation des bords adjacents pour former un sac fermé (36), le découpage d'un trou (40) dans le tissu filtrant grossier de la feuille filtrante flexible (38), et la fixation d'un bord du trou à un rebord de l'orifice d'entrée (30),
dans lequel le tissu filtrant fin (44) est positionné pour se trouver plus près de la sortie que le tissu filtrant grossier (42).

11. Procédé selon la revendication 11, dans lequel le tissu filtrant grossier (42) et le tissu filtrant fin (44) sont fixés l'un à l'autre par soudage.

12. Procédé selon la revendication 10 ou 11,
dans lequel, à l'étape b), la feuille filtrante flexible (38) est fixée sur une périphérie externe (34, 37) à une paroi interne du boîtier (35).

13. Procédé selon l'une des revendications 10 à 12, dans lequel à l'étape a), le tissu filtrant fin (44) est fixé seulement sur une partie de son bord au tissu filtrant grossier (42), ou
dans lequel, à l'étape a), le tissu filtrant fin (44) est fixé sur toute une périphérie de son bord au tissu filtrant grossier (42) pour reposer contre le tissu filtrant grossier (42).
